# EUROPEAN PATENT SPECIFICATION

(11) **EP 2 869 002 B1**
(45) Date of publication and mention of the grant of the patent: **20.02.2019**
(21) Application number: 14188730.7
(22) Date of filing: 14.10.2014
(51) Int. Cl.: F25B 43/02, F25B 49/02, F25B 40/02, F25B 31/00, F25B 41/00

(54) **Air conditioner and method of controlling the same**
Klimaanlage und zugehöriges Verfahren zur Steuerung
Climatiseur et procédé de commande correspondant

(30) Priority: 30.10.2013 KR 20130130610
(43) Date of publication of application: 06.05.2015
(73) Proprietor: LG ELECTRONICS INC., Yeongdeungpo-Gu Seoul 150-721 (KR)
(72) Inventor: Joo, Jinyoung, 153-802 Seoul (KR); Jang, Seokhoon, 153-802 Seoul (KR)
(74) Representative: Vossius & Partner Patentanwälte Rechtsanwälte mbB

(56) References cited:
- JP-A- 2001 324 236
- JP-A- 2001 349 625
- JP-A- 2001 349 644
- US-A1- 2008 209 924

## Description

### BACKGROUND

The present disclosure relates to an air conditioner and a method of controlling the same.

US 2008/209924 A1 discloses an air conditioner according to the preamble of claim 1 and a method for operating an air conditioner according to the preamble of claim 8.

JP 2001 349625 A relates to an air conditioner in which a first, a second, and a third compressor connected side by side, a four-way valve, an outdoor heat exchanger, an expansion valve, plural indoor heat exchangers and an accumulator are connected to each other to form a refrigerant circuit. Further provided are a first, a second and a third oil separator and a first to a sixth opening or closing valve. Each of a uniform oil pipe and the third compressor is provided with oil level sensors for use in sensing an oil surface level of each of the compressors so as to control an opening or closing of the third, fourth, fifth and sixth opening or closing valve in response to the oil surface level of each of the compressors detected by the oil level sensors.

JP 2001 324236 relates to an air conditioner comprising a first, second and third compressor connected in parallel, first, second, third and fourth oil separators and first to ninth opening and closing valves. The first, second and third compressors are provided respectively with oil level sensors each detecting an oil level of each compressor, and opening and closing of the fourth, fifth, sixth, seventh, eighth and ninth opening-closing valves are controlled in accordance with the respective oil level of the compressors.

Air conditioners are home appliances that maintain indoor air into the most proper state according to use and purpose thereof. In general, such an air conditioner includes a compressor, a condenser, an expansion device, and an evaporator. Thus, the air conditioner has a refrigerant cycle in which compression, condensation, expansion, and evaporation processes of a refrigerant are performed to cool or heat a predetermined space.

The predetermined space may be variously provided according to a place at which the air conditioner is used. For example, when the air conditioner is disposed in a home or office, the predetermined space may be an indoor space of a house or building. On the other hand, when the air conditioner is disposed in a vehicle, the predetermined space may be a riding space in which a person is ridden.

When the air conditioner performs a cooling operation, an outdoor heat-exchanger provided in an outdoor unit may serve as a condenser, and an indoor heat-exchanger provided in an indoor unit may serve as an evaporator. On the other hand, when the air conditioner performs a heating operation, the indoor heat-exchanger may serve as a condenser, and the outdoor heat-exchanger may serve as an evaporator.

An inner temperature of the compressor increases to a high temperature while the compressor compresses the refrigerant to discharge. A predetermined amount of oil for lubricating and cooling may be included in the compressor. However, as described above, when the inner temperature of the compressor increases to a high temperature, the oil in the compressor may be evaporated and included in the refrigerant to be discharged. Thus, the oil received in the compressor is reduced in amount.

Therefore, an oil separator may be connected to a discharge tube of the compressor to separate the oil included in the refrigerant to re-collect the separated oil into the compressor. When the compressor is provided in plurality, the oil separator may be connected to an outlet-side of each of the compressors.

When the oil separator is connected to the outlet-side of each of the plurality of compressors to collect the oil, an amount of oil received in the compressor is not uniform.

That is, when the compressors have different capacities from each other to discharge different amounts of refrigerant, amounts of oil to be discharged may be different from each other. Thus, the oil in the compressors is imbalanced in amount. Also, when the compressor operates in a state where the amount of oil is non-uniformly maintained, the compressor may be broken, and thus the cooling/heating system may abnormally operate.

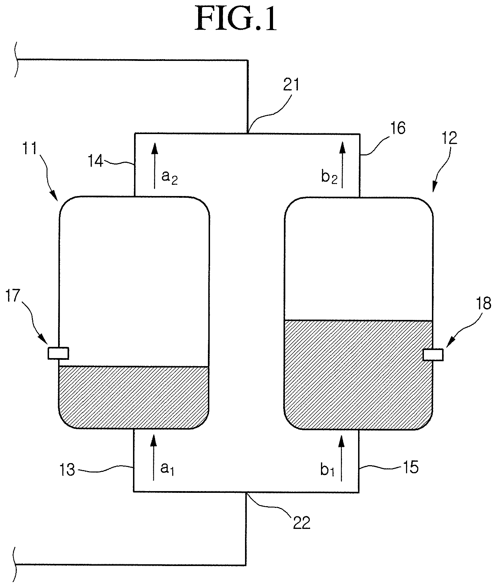

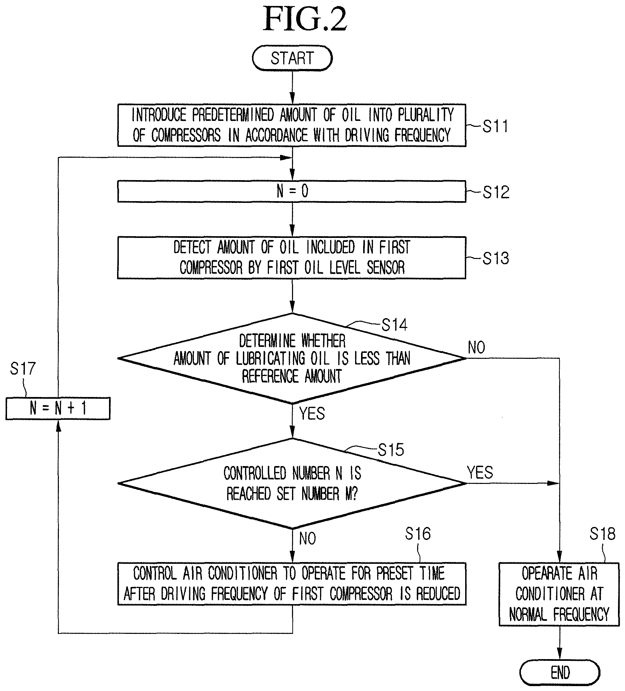

Fig. 1 is a view illustrating constitutions of a plurality of compressors in an air conditioner according to a related art, and Fig. 2 is a view illustrating a method of controlling an oil balancing in the air conditioner according to the related art.

Referring to Figs. 1 and 2, an air conditioner according to the related art includes a first compressor 11 and a second compressor 12.

A first inflow tube 13 guiding introduction of a refrigerant or oil and a first discharge tube 14 guiding the refrigerant or oil discharged from the first compressor 11 may be connected to the first compressor 11. A second inflow tube 15 guiding introduction of the refrigerant or oil and a second discharge tube 16 guiding the refrigerant or oil discharged from the second compressor 12 may be connected to the second compressor 12.

The first and second inflow tubes 13 and 15 are branched at a branch part 22, and the branched first and second inflow tubes are respectively connected to the compressors 11 and 12. Also, the first and second discharge tubes 14 and 16 are combined with each other at a combination part 21.

A first oil level sensor 17 and a second oil level sensor 18 may be disposed in the first and second compressors 11 and 12, respectively. Each of the oil level sensors 17 and 18 may detect an amount of oil at a predetermined position in the compressor.

When the first and second compressors 11 and 12 operate at a set driving frequency, a predetermined amount of oil may be introduced into the first and second compressors 11 and 12 in accordance with the corresponding driving frequency. A controlled number N is initialized to zero. Here, in operations S11 and S12, the controlled number N may be understood as the number of control operations performed to reduce the driving frequency of the first compressor 11.

Also, in operations S13 and S14, the first oil level sensor 17 detects an amount of oil contained in the first compressor 11 and determines whether the detected oil amount is less than a reference amount in the first compressor 11.

When it is determined that the detected oil amount is less than the reference amount, it may be determined whether the controlled number N has reached a first set number M. When N<M, the first compressor 11 may perform a control to reduce the driving frequency and then operate for a preset time. Also, the controlled number N is counted to increase by 1 (N=N+1). Then, the process may return to the operation of S13. The operation of S13 to S17 may be repeated.

During the process, in operation 16, when it is determined that N=M, the first and second compressors 11 and 12 operate at a normal frequency.

That is, in the related art, when an amount of oil contained in one compressor of the plurality of compressors is less than the reference amount, it is controlled that the corresponding compressor is reduced in driving frequency to reduce the discharge amount of refrigerant, and then, a relatively large amount of refrigerant is discharged from the rest of the compressors to adjust the amount of oil contained in the refrigerant.

Therefore, since it takes a lot of time to collect the oil, oil balancing may not be quickly achieved.

### SUMMARY

The invention provides an air conditioner detecting an oil balance between a plurality of compressors to vary an oil return passage according to the detected result, thereby more actively and quickly controlling an oil balance and a method of controlling the same.

According to the present invention the above objective is solved by the features of claim 1 and claim 8. Preferred embodiments are defined in the dependent claims.

The first compressor may be a main compressor, and the second compressor may be a sub compressor.

The air conditioner may further include a control unit for controlling an operation of the first valve, a second valve, or a third valve according to lack of the oil in the first compressor or the second compressor.

When the control unit determines that the first and second compressors lack oil, the control unit may increase an amount of refrigerant passing through the first valve and decrease an amount of refrigerant passing through the second and third valves.

When the control unit determines that the first compressor lacks oil, and the second compressor does not lack oil, the control unit may decrease an amount of refrigerant passing through the first and third valves and increase an amount of refrigerant passing through the second valve.

The oil level sensor may include: a first oil level sensor disposed at a set height of the first compressor; and a second oil level sensor disposed at a set height of the second compressor.

The valve may include a solenoid valve or an electronic expansion valve.

In another embodiment, a method of controlling an air conditioner including first and second oil separators that are respectively connected to first and second compressors to separate oil from refrigerants discharged from the first and second compressors, the method includes: detecting an amount of oil in each of the compressors by using an oil level sensor disposed in each of the first and second compressors; and selectively opening a plurality of return passages for collecting the oil from the first oil separator or the second oil separator according to the detected oil amount, wherein the plurality of return passages include: a first return passage collecting the oil from the first oil separator into the first compressor; a second return passage collecting the oil from the oil separator into the second compressor; and a distribution return passage extending from the first return passage to the main suction passage of the first and second compressors.

The method may further include: a first valve disposed in the distribution return passage; a second valve disposed in the first return passage; and a third return passage disposed in the third return passage, wherein, when an amount of oil in each of the first and second compressors is less than a reference amount, the second and third valves are turned off, and the first valve is turned on.

When one of the first and second compressors has an oil amount less than the reference amount, the first valve may be turned off, and one of the second and third valves may be turned on.

In further another embodiment, an air conditioner includes: a first compressor including a first oil level sensor; a first oil separator for separating oil from a refrigerant discharged from the first compressor; a second compressor including a second oil level sensor; a second oil separator for separating oil from a refrigerant discharged from the second compressor; a main suction passage disposed at suction-sides of the first and second compressors; a first suction passage branched from the main suction passage to extend to the first compressor; a second suction passage branched from the main suction passage to extend to the second compressor; a first return passage extending from the first oil separator to the first suction passage; a distribution return passage branched from the first return passage to extend to the main suction passage; and a second return passage extending from the second oil separator to the second suction passage, wherein the first return passage, the second return passage, or a third return passage is selectively opened according to an amount of oil detected by the first or second oil level sensor.

The air conditioner may further include a first valve disposed in the distribution return passage.

The air conditioner may further include: a second valve disposed in the first return passage; and a third valve disposed in the second return passage.

When the amount of oil detected by each of the first and second oil level sensors is less than a reference amount, the first valve may be opened, and the second and third valves may be closed.

The air conditioner may further include: a first capillary tube disposed in the first return passage; and a second capillary tube disposed in the second return passage.

The details of one or more embodiments are set forth in the accompanying drawings and the description below. Other features will be apparent from the description and drawings, and from the claims.

### BRIEF DESCRIPTION OF THE DRAWINGS

Fig. 1 is a view illustrating constitutions of a plurality of compressors in an air conditioner according to a related art.
Fig. 2 is a view illustrating a method of controlling an oil balancing in the air conditioner according to the related art.
Fig. 3 is a schematic view of an air conditioner according to an embodiment.
Fig. 4 is a block diagram of constitutions for controlling the oil balancing in the air conditioner according to an embodiment.
Fig. 5 is a flowchart illustrating a process of controlling the oil balancing in the air conditioner according to an embodiment.
Figs. 6 to 9 are views illustrating an oil collection path depending on the process of controlling the oil balancing in the air conditioner according to an embodiment.

### DETAILED DESCRIPTION OF THE EMBODIMENTS

Reference will now be made in detail to the embodiments of the present invention, examples of which are illustrated in the accompanying drawings. The invention may, however, be embodied in many different forms and should not be construed as being limited to the embodiments set forth herein; rather, that alternate embodiments included in other retrogressive inventions or falling within the scope of the present invention will fully convey the concept of the invention to those skilled in the art.

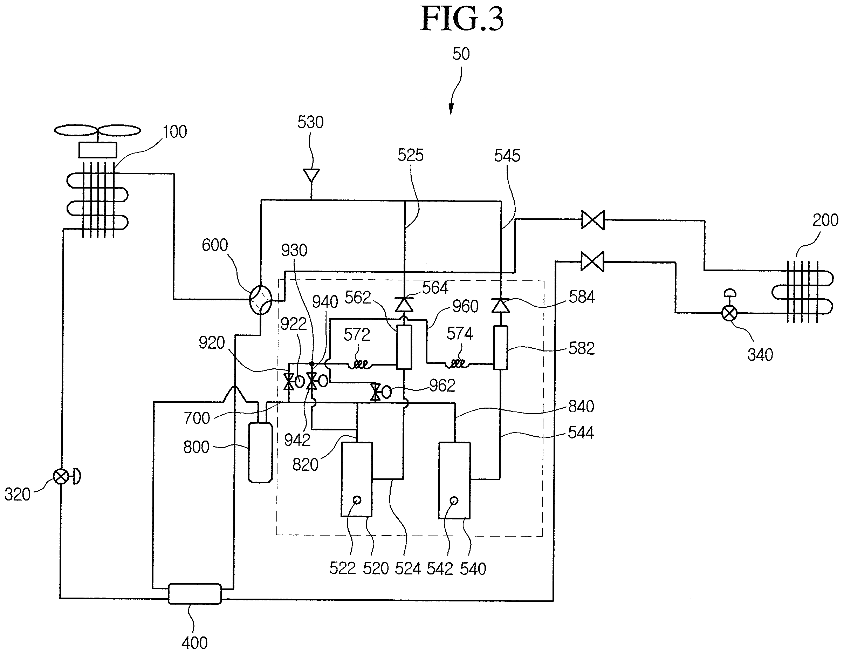

Fig. 3 is a schematic view of an air conditioner according to an embodiment.

Referring to Fig. 3, an air conditioner 50 according to an embodiment includes an indoor unit disposed in an indoor space and an outdoor unit disposed in an outdoor space. The outdoor unit and the indoor unit include an outdoor heat exchanger 100 and an indoor heat exchanger 200 for heat-exchanging, respectively.

The outdoor unit includes a plurality of compressors 520 and 540 and oil separators 562 and 582 respectively disposed at outlet-sides of the plurality of compressors 520 and 540 to separate oil from a refrigerant discharged from each of the compressors.

The plurality of compressors 520 and 540 include a first compressor 520 and a second compressor 540. The first and second compressors 520 and 540 may be parallelly connected to each other.

For example, the first compressor 520 may correspond to a main compressor, and the second compressor 540 may correspond to a sub compressor. Thus, according to performance or load of a system, the first compressor 520 may firstly operate, and then the second compressor 540 may additionally operates when the first compressor 520 does not have sufficient capacity. An amount of refrigerant discharged from the first compressor 520 may be greater than that of refrigerant discharged from the second compressor 540.

The oil separators 562 and 582 include a first oil separator 562 disposed at an outlet-side of the first compressor 520 and a second oil separator 582 disposed at the outlet-side of the second compressor 540.

The air conditioner 50 further includes a first discharge passage 524 extending from the outlet-side of the first compressor 520 to the first oil separator 532 and a second discharge passage 544 extending from the outlet-side of the second compressor 540 to the second oil separator 582.

Also, the air conditioner 50 further includes a first oil discharge passage 525 disposed at an outlet-side of the first oil separator 532 and a second oil discharge passage 545 disposed at an outlet-side of the second oil separator 582. The first oil discharge passage 525 is combined with the second oil discharge passage 545. The combined discharge passage may extend to a flow switching part 600.

A high pressure sensor 530 for detecting a high pressure of the refrigerant may be disposed in the combined passage. Also, the refrigerant passing through the high pressure sensor may be introduced into the flow switching part 600 and may be guided from the flow switching part 600 toward the outdoor heat exchanger 100 or the indoor unit.

A first check valve 564 is disposed in the first oil discharge passage 525 to prevent the refrigerant from being re-introduced into the first oil separator 562. Also, a second check valve 584 is disposed in the second oil discharge passage 545 to prevent the refrigerant from being re-introduced into the second oil separator 582.

A main expansion valve 320 is disposed at the outlet-side of the outdoor heat exchanger 100 during a cooling operation. The main expansion device 320 may include an electric expansion valve (EEV). When the cooling operation is performed, the main expansion valve 320 may be fully opened and thus may not perform decompression of the refrigerant.

Also, the air conditioner further includes an overcooling heat exchanger 400 into which the refrigerant passing through the outdoor heat exchanger 100 is introduced and a gas-liquid separator 800 for separating a gaseous refrigerant from the refrigerant before the refrigerant is introduced into the compressor.

The gaseous refrigerant separated by the gas-liquid separator 800 may be transferred into the first and second compressors 520 and 540 through a main suction passage 700. The main suction passage 700 extends from an outlet-side of the gas-liquid separator 800 toward the first and second compressors 540 and 540.

The main suction passage 700 is branched into a first suction passage 820 and a second suction passage 840. The first suction passage 820 may extend to the first compressor 520, and the second suction passage 840 may extend to the second compressor 540. That is, the first and second suction passages 820 and 840 may extend from the main suction passage 700 to the first and second compressors 520 and 540, respectively.

The air conditioner 50 includes return passages 920, 940, and 960 for collecting the oil from the first and second oil separators 562 and 582 into the first and second compressors 520 and 540.

The return passages 920, 940, and 960 include a first return passage 940 extending from the first oil separator 562 to the first suction passage 820, a second return passage 960 extending from the second oil separator 564 to the second suction passage 840, and a distribution return passage 920 extending from the first return passage 940 to the main suction passage 700.

In detail, the first return passage 940 has one end connected to the first oil separator 562 and the other end connected to the first suction passage 820. Also, the second return passage 960 has one end connected to the second oil separator 564 and the other end connected to the second suction passage 840.

The distribution return passage 920 has one end connected to a branch part 930 of the first return passage 940 and the other end connected to the main suction passage 700. In other words, the distribution return passage 920 is branched from the first return passage 940 and connected to the main suction passage 700. Here, a portion of the first return passage 940 where the distribution return passage 920 is branched may be called the branch part 930.

The first and second return passages 940 and 960 may further include a first capillary tube 572 and a second capillary tube 574, respectively to adjust an amount of oil to be collected.

Valves 922, 942, and 962 for controlling the collection of the oil may be disposed in the return passages 920, 940, and 960, respectively.

In detail, a first valve 922 may be disposed in the distribution return passage 920, and a second valve 942 may be disposed in the first return passage 940. Also, the third valve 962 may be disposed in the second return passage 960.

For example, each of the first to third valves 922, 942, and 962 may include a solenoid valve that is capable of controlling an on-off operation thereof. For another example, each of the first to third valves 922, 942, and 962 may include an electronic expansion valve that is capable of adjusting an opening degree thereof.

Each of the first to third valves 922, 942, and 962 may be controlled to adjust an amount of oil collected through each of the return passages 920, 940, and 960.

When the second valve 942 is opened, the oil in the first oil separator 562 may be introduced into the first suction passage 820 through the first return passage 940 and the second valve 942 and then be collected into the first compressor 520. Thus, when the first compressor 520 lacks oil, the oil may be easily collected from the first oil separator 562.

When the third valve 962 is opened, the oil in the second oil separator 582 may be introduced into the second suction passage 840 through the second return passage 960 and the third valve 962 and then be collected into the second compressor 540. Thus, when the second compressor 540 lacks oil, the oil may be easily collected from the second oil separator 582.

The first compressor 520 may function as the main compressor. The first compressor 520 may firstly operate before the second compressor 540 operates according to the performance of the system, and thus an amount of oil discharged from the first compressor 520 may relatively increase.

Here, a portion of the oil discharged from the first compressor 520 may flow into the distribution return passage 920. In detail, when the first valve 922 is opened, at least one portion of the oil in the first return passage 940 may be introduced from the branch part 930 to the distribution return passage 920 and be supplied to the main suction passage 700 via the first valve 922.

The oil supplied into the main suction passage 700 may be divided and collected into the first and second compressors 520 and 540 and. That is, at lease one portion of the oil in the main suction passage 700 may be collected into the first compressor 520 through the first suction passage 820, and the rest portion of the oil may be collected into the second compressor 540 through the second suction passage 840.

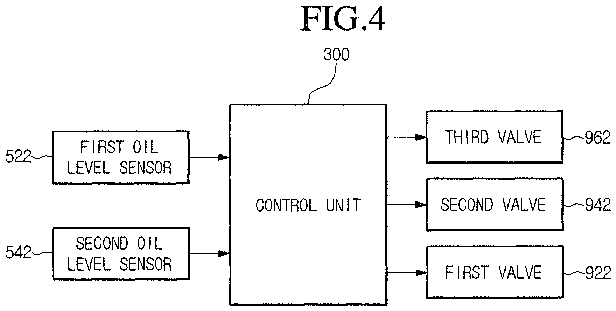

Fig. 4 is a block diagram of constitutions for controlling the oil balancing in the air conditioner according to an embodiment.

Referring to Fig. 4, the air conditioner 50 according to an embodiment further includes a first oil level sensor 522 detecting an amount of oil in the first compressor 520 and a second oil level sensor 542 detecting an amount of oil in the second compressor 540.

The first oil level sensor 522 may be disposed at a preset height of the first compressor 520. The second oil level sensor 542 may be disposed at a preset height of the second compressor 540. Each of the preset heights of the first and second compressors 520 and 540 may be understood as a height that is defined when a reference amount of oil is stored.

The first oil level sensor 522 may detect the amount of oil in the first compressor 520 to determine whether a height of a surface of the oil stored in the first compressor 520 is lower than that of a first reference oil surface. The first oil level sensor 522 may be disposed at a position corresponding to the height of the first reference oil surface.

The second oil level sensor 542 may detect the amount of oil in the second compressor 540 to determine whether a height of the oil surface of the oil stored in the second compressor 540 is lower than that of a second reference oil surface. The second oil level sensor 542 may be disposed at a position corresponding to the height of the second reference oil surface.

Information detected by the first oil level sensor 522 or the second oil level sensor 542 may be transmitted to a control unit 300. When the control unit 300 receives the detected information from the first and second oil level sensors 522 and 542, the control unit 300 may control the first to third valves 922, 942, and 962 according to the received information. The control unit 300 may actively control a flow path of the collected oil and effectively achieve oil balancing by the above-described control.

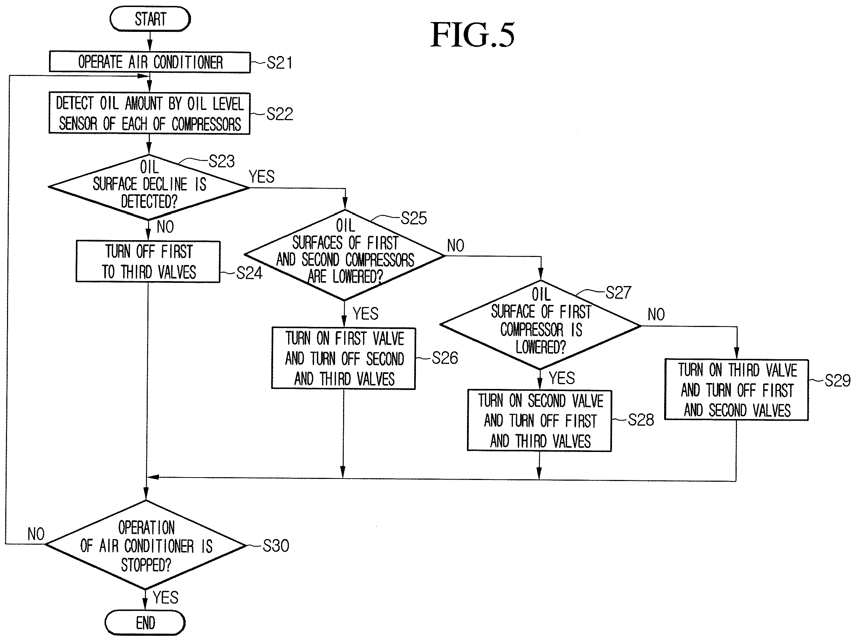

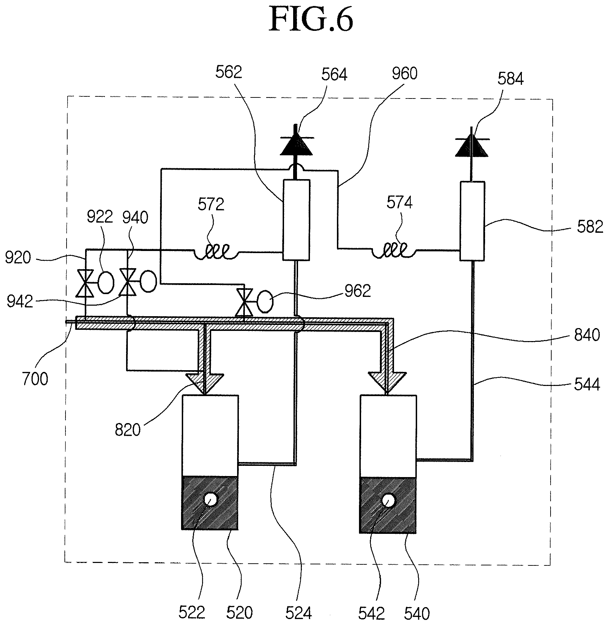

Fig. 5 is a flowchart illustrating a process of controlling the oil balancing in the air conditioner according to an embodiment, and Figs. 6 to 9 are views illustrating an oil collection path depending on the process of controlling the oil balancing in the air conditioner according to an embodiment.

Referring to Fig. 5, when an operation of the air conditioner 50 starts, the refrigerant is compressed in the first and second compressors 520 and 540. In this process, in operations S21 and S22, the first oil level sensor or the second oil level sensor 542 may detect an amount of oil in the compressors, respectively.

In operation S23, the control unit 300 may determine whether an oil surface in the first compressor 520 or the second compressor 540 is lowered, i.e., whether a height of the oil surface in each of the compressors is lower than the reference oil surface, according to the amount of oil detected through each of the first and second oil level sensors 522 and 542.

When the control unit 300 determines that the oil surfaces in the first and second oil level sensors 522 and 542 are not lowered, amounts of refrigerant passing through the first valve 922 in the distribution return passage 920, the second valve 942 in the first return passage 940, and the third valve 962 in the third return passage 960 may be reduced.

For example, when each of the first to third valves 922, 942, and 962 is a solenoid valve, the first to third valves 922, 942, and 962 may be turned off. On the other hand, in operation S24, when each of the first to third valves 922, 942, and 962 is an electronic expansion valve, each of the first to third valves 922, 942, and 962 may be reduced in opening degree.

Fig. 6 illustrates a state in which each of the first to third valves 922, 942, and 962 is turned off or reduced in opening degree. In the controlled state as illustrated in Fig. 6, a refrigerant passing through the gas-liquid separator 800 flows through the main suction passage 700 and is branched into the first and second suction passages 820 and 840, and then, the branched refrigerants are respectively suctioned into the first and second compressors 520 and 540.

The oil separated from the first and second oil separators 562 and 582 may not be collected into the first and second compressors 540, respectively. Also, the amounts of oil in the first and second compressors 520 and 540 may be uniformly maintained.

When it is determined that the oil surface in each of the first and second compressors 520 and 540 is lower than the reference oil surface in the operation of S23, the amount of refrigerant passing through the first valve 922 may increase, and the amount of refrigerant passing through the second and third valves 942 and 962 may be reduced in operation S25.

For example, when each of the first to third valves 922, 942, and 962 is a solenoid valve, the first valve 922 may be opened, and the second and third valves 942 and 962 may be closed. On the other hand, in operation S26, when each of the first to third valves 922, 942, and 962 is an electronic expansion valve, the first valve 922 may increase in opening degree, and each of the second and third valves 942 and 962 may be reduced in opening degree.

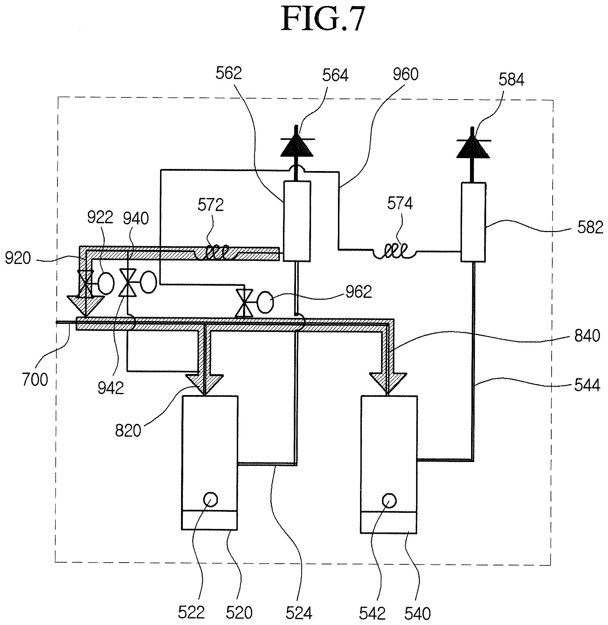

Fig. 7 illustrates a state where the first valve 922 is turned on, and the second and third valves 942 and 962 are turned off. In the controlled state as illustrated in Fig. 7, the refrigerant passing through the gas-liquid separator 800 flows through the main suction passage 700 and is branched into the first and second suction passages 820 and 840, and then, the branched refrigerants are respectively suctioned into the first and second compressors 520 and 540.

Also, the oil separated from the first oil separator 562 is introduced into the main suction passage 700 via the first return passage 940 and the distribution return passage 920 and is branched into the first and second suction passages 820 and 840, and then the branched oil is collected into the first and second compressors 520 and 540.

That is, the oil collected from the first oil separator 562 together with the refrigerant may be branched and suctioned into the first and second compressors 520 and 540.

When it is determined that the oil surface in the first compressor 520 is lower than the reference oil surface, and the oil surface in the second compressor 540 is higher than the reference oil surface, that is, the oil surface in the second compressor 540 is maintained to a normal oil surface, the amount of refrigerant passing through the first valve 922 and the third valve 962 may be reduced, and the amount of refrigerant passing through the second valve 942 may increase.

For example, when each of the first to third valves 942, 942, and 962 is a solenoid valve, the second valve 942 may be turned on, and the first and third valves 922 and 962 may be turned off. On the other hand, in operations S27 and S28, when each of the first to third valves 942, 942, and 962 is an electronic expansion valve, the second valve 942 may increase in opening degree, and each of the first and third valves 922 and 962 may be reduced in opening degree.

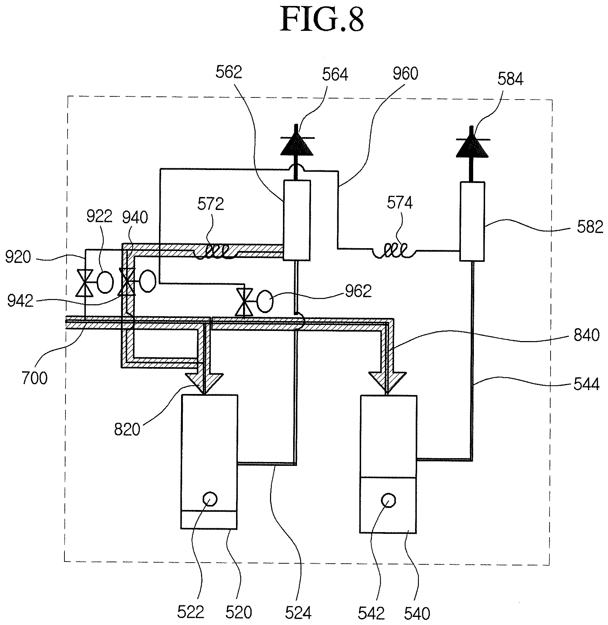

Fig. 8 illustrates a state where the second valve 942 is opened, and the first and third valves 922 and 962 are closed. In the controlled state as illustrated in Fig. 8, the refrigerant passing through the gas-liquid separator 800 flows through the main suction passage 700 and is branched into the first and second suction passages 820 and 840, and then, the branched refrigerants are respectively suctioned into the first and second compressors 520 and 540.

Also, the oil separated from the first oil separator 562 is introduced into the first suction passage 820 via the first return passage 940 and then is collected into the first compressor 520.

When it is determined that the oil surface in the first compressor 520 is higher than the reference oil surface, that is, the oil surface in the first compressor 520 is maintained to the normal oil surface, and the oil surface in the second compressor 540 is lower than the reference oil surface, the amount of refrigerant passing through the first valve 922 and the second valve 942 may be reduced, and the amount of refrigerant passing through the third valve 962 may increase.

For example, when each of the first to third valves 962, 942, and 962 is a solenoid valve, the third valve 962 may be turned on, and the first and second valves 922 and 942 may be turned off.

On the other hand, in operation S29, when each of the first to third valves 962, 942, and 962 is an electronic expansion valve, the third valve 962 may increase in opening degree, and each of the first and second valves 922 and 942 may be reduced in opening degree.

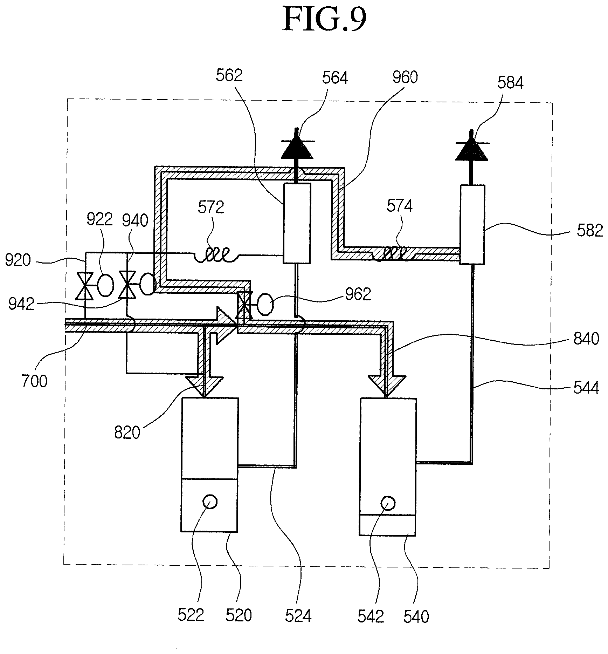

Fig. 9 illustrates a state where the third valve 962 is turned on, and the first and second valves 922 and 942 are turned off. In the controlled state as illustrated in Fig. 9, the refrigerant passing through the gas-liquid separator 800 flows through the main suction passage 700 and is branched into the first and second suction passages 820 and 840, and then, the branched refrigerants are respectively suctioned into the first and second compressors 520 and 540.

Also, the oil separated from the second oil separator 582 is introduced into the second suction passage 840 via the second return passage 960 and then is collected into the second compressor 540.

In operation S30, the above-described controlling method may be repeatedly performed until the air conditioner 50 is stopped.

According to the controlling method, when it is determined that the first and second compressors 520 and 540 lacks oil, the plurality of valves may be controlled to immediately collect the oil through the distribution passage 920 or the first and second return passages 940 and 960.

According to the embodiments, since the plurality of return passages for collecting the oil from the oil separator into the plurality of compressors are connected to each other, and the plurality of return passages are actively and selectively opened according to the oil balance information detected by the oil level sensors, the control for the oil balancing may be more quickly performed.

Therefore, since the oil balancing of the plurality of compressors may be effectively maintained, the compressor may be improved in operation reliability.

## Claims

1. An air conditioner comprising:
first and second compressors (520, 540);
an accumulator (800) disposed at an inlet side of the first and second compressors (520, 540);
a main suction passage (700) connected with an outlet of the accumulator (800);
first and second suction passages (820,840) branched from the main suction passage (700) to extend to the first and second compressors (520, 540), to guide suction of a refrigerant into the first and the second compressors (520, 540);
first and second oil separators (562, 582) disposed at an outlet side of the first and the second compressor (520, 540), respectively and configured to separate oil from the first and the second compressors (520, 540);
an oil level sensor (522, 542) disposed in the first or second compressor (520, 540) to detect whether the compressor lacks oil;
a first return passage (940) extending from the first oil separator (562) toward the first suction passage (820), to introduce the oil separated from the first oil separator (562) into the first compressor (520) and in which a second valve (942) is installed;
a second return passage (960) extending from the second oil separator (582) toward second suction passage (840), to introduce the oil separated from the second oil separator (582) into the second compressor (540) and in which a third valve (962) is installed,
**characterized in that**:
the first return passage (940) includes a branch part (930),
a distribution return passage (920) is branched from the branch part (930) of the first return passage (940) to be connected to the main suction passage (700); and
a first valve (922) is disposed in the distribution return passage (920).

2. The air conditioner according to claim 1, wherein the first compressor (520) is a main compressor, and
the second compressor (540) is a sub compressor.

3. The air conditioner according to claim 1, further comprising a control unit (300) configured to control an operation of the first valve (922), the second valve (942), or the third valve (962), based on lack of the oil in the first compressor or the second compressor (520, 540) .

4. The air conditioner according to claim 3, wherein, when the control unit (300) is configured to determine that the first and second compressors (520, 540) lack oil,
the control unit (300) is configured to control the first valve (922) to allow an amount of refrigerant passing through the first valve (922) to increase, and
the control unit (300) is configured to control the second and third valves (942, 962) to allow an amount of refrigerant passing through the second and third valves (942, 962) to decrease.

5. The air conditioner according to claim 3, wherein, when the control unit (300) is configured to determine that the first compressor (520) lacks oil, and the second compressor (540) does not lack oil, the control unit (300) is configured to control the first and third valves (922, 962) to allow an amount of refrigerant passing through the first and third valves (922, 962) to decrease, and the control unit (300) is configured to control the second valve (942) to allow an amount of refrigerant passing through the second valve (942) to increase.

6. The air conditioner according to any one of previous claims, wherein the oil level sensor comprises:
a first oil level sensor (522) disposed at a set height of the first compressor; and
a second oil level sensor (542) disposed at a set height of the second compressor.

7. The air conditioner according to any one of previous claims, wherein the valve comprises a solenoid valve or an electronic expansion valve.

8. A method of controlling an air conditioner comprising:
first and second oil separators (562, 582) that are respectively connected to first and second compressors (520, 540) to separate oil from refrigerant discharged from the first and second compressors (520, 540),
an accumulator (800) disposed at an inlet side of the first and second compressors (520, 540);
a main suction passage (700) connected with an outlet of the accumulator (800); and
first and second suction passages (820, 840) branched from the main suction passage (700) to extend to the first and second compressors (520, 540), to guide suction of refrigerant into the first and the second compressors (520, 540),
the method comprising:
detecting (S22) an amount of oil in each of the compressors (520, 540) by using an oil level sensor (522, 542) disposed in each of the first and second compressors (520, 540); and
selectively opening (S26, S28, S29) a plurality of return passages (920, 940, 960) for returning the oil from the first oil separator (562) or the second oil separator (582) according to the detected oil amount,
**characterized in that** the plurality of return passages comprise:
a first return passage (940) returning the oil from the first oil separator (562) into the first compressor (520) ;
a second return passage (960) returning the oil from the second oil separator (582) into the second compressor (540); and
a distribution return passage (920) extending from a branch part (930) of the first return passage (940) to the main suction passage (700) of the first and second compressors (520, 540).

9. The method according to claim 8, further comprising:
a first valve (922) disposed in the distribution return passage;
a second valve (942) disposed in the first return passage; and
a third return passage (962) disposed in the second return passage,
wherein, when an amount of oil in each of the first and second compressors (520, 540) is less than a reference amount, the second and third valves (942, 962) are turned off, and the first valve (922)is turned on.

10. The method according to claim 9, wherein when one of the first and second compressors (520, 540) has an oil amount less than the reference amount, the first valve (922) is turned off, and one of the second and third valves (942, 962) is turned on.

## Patentansprüche

1. Klimaanlage mit:
einem ersten und zweiten Verdichter (520, 540);
einem Akkumulator (800), der auf einer Einlassseite des ersten und zweiten Verdichters (520, 540) angeordnet ist;
einem Hauptansaugkanal (700), der mit einem Auslass des Akkumulators (800) verbunden ist;
einem ersten und zweiten Ansaugkanal (820,840), die vom Hauptansaugkanal (700) abzweigen, so dass sie sich zum ersten und zweiten Verdichter (520, 540) erstrecken, um die Ansaugung eines Kältemittels in den ersten und den zweiten Verdichter (520, 540) zu leiten;
einen ersten und zweiten Ölabscheider (562, 582), die auf einer Auslassseite des ersten bzw. des zweiten Verdichters (520, 540) angeordnet und konfiguriert sind, Öl aus dem ersten und zweiten Verdichter (520, 540) abzuscheiden;
einem Ölstandssensor (522, 542), der im ersten oder zweiten Verdichter (520, 540) angeordnet ist, um zu ermitteln, ob dem Verdichter Öl fehlt;
einem ersten Rückkanal (940), der sich vom ersten Ölabscheider (562) zum ersten Ansaugkanal (820) erstreckt, um das vom ersten Ölabscheider (562) abgeschiedene Öl in den ersten Verdichter (520) einzuleiten, und in dem ein zweites Ventil (942) eingebaut ist;
einen zweiten Rückkanal (960), der sich vom zweiten Ölabscheider (582) zum zweiten Ansaugkanal (840) erstreckt, um das vom zweiten Ölabscheider (582) abgeschiedene Öl in den zweiten Verdichter (540) einzuleiten, und in dem ein drittes Ventil (962) eingebaut ist,
**dadurch gekennzeichnet, dass**:
der erste Rückkanal (940) einen Abzweigteil (930) aufweist,
ein Verteilungsrückkanal (920) vom Abzweigteil (930) des ersten Rückkanals (940) abzweigt, um mit dem Hauptansaugkanal (700) verbunden zu sein; und
ein erstes Ventil (922) im Verteilungsrückkanal (920) angeordnet ist.

2. Klimaanlage nach Anspruch 1, wobei der erste Verdichter (520) ein Hauptverdichter ist und der zweite Verdichter (540) einen Nebenverdichter ist.

3. Klimaanlage nach Anspruch 1, die ferner eine Steuereinheit (300) aufweist, die konfiguriert ist, einen Betrieb des ersten Ventils (922), des zweiten Ventils (942) oder des dritten Ventils (962) beruhend auf dem Ölmangel im ersten Verdichter oder im zweiten Verdichter (520, 540) zu steuern.

4. Klimaanlage nach Anspruch 3, wobei, wenn die Steuereinheit (300) konfiguriert ist festzustellen, dass dem ersten und zweiten Verdichter (520, 540) Öl fehlt,
die Steuereinheit (300) konfiguriert ist, das erste Ventil (922) zu steuern, um es zu ermöglichen, dass eine Kältemittelmenge zunimmt, die durch das erste Ventil (922) geht, und
die Steuereinheit (300) konfiguriert ist, das zweite und dritte Ventil (942, 962) zu steuern, um es zu ermöglichen, dass eine Kältemittelmenge abnimmt, die durch das zweite und dritte Ventil (942, 962) geht.

5. Klimaanlage nach Anspruch 3, wobei, wenn die Steuereinheit (300) konfiguriert ist festzustellen, dass dem ersten Verdichter (520) Öl fehlt, und dem zweiten Verdichter (540) kein Öl fehlt,
die Steuereinheit (300) konfiguriert ist, das erste und dritte Ventil (922, 962) zu steuern, um es zu ermöglichen, dass eine Kältemittelmenge abnimmt, die durch das erste und dritte Ventil (922, 962) geht, und
die Steuereinheit (300) konfiguriert ist, das zweite Ventil (942) zu steuern, um es zu ermöglichen, dass eine Kältemittelmenge zunimmt, die durch das zweite Ventil (942) geht.

6. Klimaanlage nach einem der vorhergehenden Ansprüche, wobei der Ölstandssensor aufweist:
einen ersten Ölstandssensor (522), der auf einer Sollhöhe des ersten Verdichters angeordnet ist; und
einen zweiten Ölstandssensor (542), der auf einer Sollhöhe des zweiten Verdichters angeordnet ist.

7. Klimaanlage nach einem der vorhergehenden Ansprüche, wobei das Ventil ein Magnetventil oder ein elektronisches Expansionsventil aufweist.

8. Verfahren zum Steuern einer Klimaanlage, die aufweist:
einen ersten und zweiten Ölabscheider (562, 582), die jeweils mit einem ersten und
zweiten Verdichter (520, 540) verbunden sind, um Öl aus einem Kältemittel abzuscheiden, das aus dem ersten und zweiten Verdichter (520, 540) ausgestoßen wird,
einen Akkumulator (800), der an einer Einlassseite des ersten und zweiten Verdichters (520, 540) angeordnet ist;
einen Hauptansaugkanal (700), der mit einem Auslass des Akkumulators (800) verbunden ist; und
einen ersten und zweiten Ansaugkanal (820, 840), der vom Hauptansaugkanal (700) abzweigt, um sich zum ersten und zweiten Verdichter (520, 540) zu erstrecken, um die Ansaugung des Kältemittels in den ersten und den zweiten Verdichter (520, 540) zu leiten,
wobei das Verfahren aufweist:
Ermitteln (S22) einer Ölmenge in jedem der Verdichter (520, 540) durch Verwenden eines Ölstandssensors (522, 542), der in jedem des ersten und zweiten Verdichters (520, 540) angeordnet ist; und
selektives Öffnen (S26, S28, S29) einer Vielzahl von Rückkanälen (920, 940, 960) zum Zurückleiten des Öls vom ersten Ölabscheider (562) oder vom zweiten Ölabscheider (582) entsprechend der ermittelten Ölmenge,
**dadurch gekennzeichnet, dass** die Vielzahl der Rückkanäle aufweist:
einen ersten Rückkanal (940), der das Öl vom ersten Ölabscheider (562) in den ersten Verdichter (520) zurückleitet;
einen zweiten Rückkanal (960), der das Öl vom zweiten Ölabscheider (582) in den zweiten Verdichter (540) zurückleitet; und
einen Verteilungsrückkanal (920), der sich von einem Abzweigteil (930) des ersten Rückkanals (940) zum Hauptansaugkanal (700) des ersten und zweiten Verdichters (520, 540) erstreckt.

9. Verfahren nach Anspruch 8, das ferner aufweist:
ein erstes Ventil (922), das im Verteilungsrückkanal angeordnet ist;
ein zweites Ventil (942), das im ersten Rückkanal angeordnet ist; und
einen dritten Rückkanal (962), der im zweiten Rückkanal angeordnet ist,
wobei, wenn eine Ölmenge in jedem des ersten und zweiten Verdichters (520, 540) kleiner als eine Bezugsmenge ist, das zweite und dritte Ventil (942, 962) ausgeschaltet werden und das erste Ventil (922) eingeschaltet wird.

10. Verfahren nach Anspruch 9, wobei wenn einer des ersten und zweiten Verdichters (520, 540) eine kleinere Ölmenge als die Bezugsmenge aufweist, das erste Ventil (922) ausgeschaltet wird und eines des zweiten und dritten Ventils (942, 962) eingeschaltet wird.

## Revendications

1. Climatiseur, comprenant :
un premier et un deuxième compresseurs (520, 540) ;
un accumulateur (800) disposé sur un côté d'entrée du premier et du deuxième compresseurs (520, 540) ;
un passage d'aspiration principal (700) relié à une sortie de l'accumulateur (800) ;
un premier et un deuxième passages d'aspiration (820, 840) partant du passage d'aspiration principal (700) et s'étendant vers le premier et le deuxième compresseurs (520, 540) pour guider l'aspiration d'un réfrigérant vers le premier et le deuxième compresseurs (520, 540) ;
un premier et un deuxième séparateurs d'huile (562, 582) disposés sur un côté de sortie respectif du premier et du deuxième compresseur (520, 540), et prévus pour séparer l'huile du premier et du deuxième compresseurs (520, 540) ;
un capteur de niveau d'huile (522, 542) disposé dans le premier ou le deuxième compresseur (520, 540) pour détecter si le compresseur manque d'huile ;
un premier passage de retour (940) s'étendant du premier séparateur d'huile (562) vers le premier passage d'aspiration (820) pour introduire l'huile séparée du premier séparateur d'huile (562) dans le premier compresseur (520), et où une deuxième vanne (942) est montée ;
un deuxième passage de retour (960) s'étendant du deuxième séparateur d'huile (582) vers le deuxième passage d'aspiration (840) pour introduire l'huile séparée du deuxième séparateur d'huile (582) dans le deuxième compresseur (540), et où une troisième vanne (962) est montée,
**caractérisé en ce que** :
le premier passage de retour (940) comprend une section de dérivation (930),
un passage de retour de distribution (920) part de la section de dérivation (930) du premier passage de retour (940) pour rejoindre le passage d'aspiration principal (700) ; et
une première vanne (922) est disposée dans le passage de retour de distribution (920).

2. Climatiseur selon la revendication 1, où le premier compresseur (520) est un compresseur principal, et où
le deuxième compresseur (540) est un compresseur secondaire.

3. Climatiseur selon la revendication 1, comprenant en outre une unité de commande (300) configurée pour commander un actionnement de la première vanne (922), de la deuxième vanne (942) ou de la troisième vanne (962) sur la base du manque d'huile dans le premier compresseur ou le deuxième compresseur (520, 540).

4. Climatiseur selon la revendication 3,
où, si l'unité de commande (300) est configurée pour déterminer que le premier et le deuxième compresseurs (520, 540) manquent d'huile,
l'unité de commande (300) est configurée pour commander la première vanne (922) de manière à augmenter la quantité de réfrigérant passant par la première vanne (922), et l'unité de commande (300) est configurée pour commander la deuxième et la troisième vannes (942, 962) de manière à diminuer la quantité de réfrigérant passant par la deuxième et la troisième vannes (942, 962).

5. Climatiseur selon la revendication 3, où, si l'unité de commande (300) est configurée pour déterminer que le premier compresseur (520) manque d'huile, et le deuxième compresseur (540) ne manque pas d'huile,
l'unité de commande (300) est configurée pour commander la première et troisième vannes (922, 962) de manière à diminuer la quantité de réfrigérant passant par la première et la troisième vannes (922, 962), et
l'unité de commande (300) est configurée pour commander la deuxième vanne (942) de manière à augmenter la quantité de réfrigérant passant par la deuxième vanne (942).

6. Climatiseur selon l'une des revendications précédentes, où le capteur de niveau d'huile comprend :
un premier capteur de niveau d'huile (522) disposé à une hauteur définie du premier compresseur ; et
un deuxième capteur de niveau d'huile (542) disposé à une hauteur définie du deuxième compresseur.

7. Climatiseur selon l'une des revendications précédentes, où la vanne comprend une électrovanne ou une vanne de détente électronique.

8. Procédé de commande d'un climatiseur, comprenant :
un premier et un deuxième séparateurs d'huile (562, 582) reliés respectivement au premier et au deuxième compresseurs (520, 540) pour séparer l'huile du réfrigérant refoulé par le premier et le deuxième compresseurs (520, 540),
un accumulateur (800) disposé sur un côté d'entrée du premier et du deuxième compresseurs (520, 540) ;
un passage d'aspiration principal (700) relié à une sortie de l'accumulateur (800) ; et
un premier et un deuxième passages d'aspiration (820, 840) partant du passage d'aspiration principal (700) et s'étendant vers le premier et le deuxième compresseurs (520, 540) pour guider l'aspiration d'un réfrigérant vers le premier et le deuxième compresseurs (520, 540),
ledit procédé comprenant :
la détection (S22) d'une quantité d'huile dans chacun des compresseurs (520, 540) au moyen de capteurs de niveau d'huile (522, 542) disposés respectivement dans le premier et le deuxième compresseurs (520, 540) ; et
l'ouverture sélective (S26, S28, S29) d'une pluralité de passages de retour (920, 940, 960) pour retourner l'huile du premier séparateur d'huile (562) ou du deuxième séparateur d'huile (582) en fonction de la quantité d'huile détectée,
**caractérisé en ce que** la pluralité de passages de retour comprend :
un premier passage de retour (940) retournant l'huile du premier séparateur d'huile (562) vers le premier compresseur (520) ;
un deuxième passage de retour (960) retournant l'huile du deuxième séparateur d'huile (582) vers le deuxième compresseur (540) ; et
un passage de retour de distribution (920) s'étendant d'une section de dérivation (930) du premier passage de retour (940) vers le passage d'aspiration principal (700) du premier et du deuxième compresseurs (520, 540).

9. Procédé selon la revendication 8, comprenant en outre :
une première vanne (922) disposée dans le passage de retour de distribution ;
une deuxième vanne (942) disposée dans le premier passage de retour ; et
un troisième passage de retour (962) disposé dans le deuxième passage de retour,
où, si une quantité de l'huile dans le premier et le deuxième compresseurs (520, 540) est inférieure à une quantité de référence, la deuxième et la troisième vannes (942, 962) sont désactivées, et la première vanne (922) est activée.

10. Procédé selon la revendication 9, où, si le premier ou le deuxième compresseur (520, 540) présente une quantité d'huile inférieure à la quantité de référence, la première vanne (922) est désactivée, et une vanne entre la deuxième et la troisième vannes (942, 962) est activée.
